# EUROPEAN PATENT APPLICATION

(11) **EP 4 492 329 A1**
(43) Date of publication of application: **15.01.2025**
(21) Application number: 24167179.1
(22) Date of filing: 28.03.2024
(51) Int. Cl.: G06T 11/60, G06F 40/166, G06T 11/00

(54) **METHOD, COMPUTER DEVICE, NON-TRANSITORY COMPUTER-READABLE RECORDING MEDIUM, AND COMPUTER PROGRAM PRODUCT FOR GENERATING IMAGE**

(30) Priority: 04.05.2023 US 202363500267 P; 16.10.2023 TW 112139431
(71) Applicant: Evolutive Labs Co., Ltd., Taipei City 115023 (TW)
(72) Inventor: HSU, YI-LI, 242 New Taipei City (TW); LAI, TZI-HUEI, 408 Taichung City (TW); WANG, CHING-FU, 408 Taichung City (TW)
(74) Representative: DTS Patent- und Rechtsanwälte PartmbB

(57) **Abstract**

A method for generating an image suitable for generating an artificial intelligence image (540, 840, 940) by means of a computer device (200) comprises receiving at least one input image (510), generating a keyword character set (520) based on the at least one input image (510), performing at least one string editing operation on the keyword character set (520) based on an editing instruction set corresponding to an editing request after receiving the editing request from any one of at least one editing button (630), generating an editing character set (530, 830, 930), and generating the artificial intelligence image (540, 840, 940) based on the editing character set (530, 830, 930). Thus, the method is suitable for generating an artificial intelligence image (540, 840, 940) and solves the issue that it is necessary for a user to first input a corresponding instruction set before a user-desired image can be generated.

## Description

### BACKGROUND OF THE INVENTION

### 1. Field of the Invention

The present disclosure relates to a method, a computer device, and a non-transitory computer-readable recording medium, and in particular to a method, a computer device, and a non-transitory computer-readable recording medium for generating an image.

### 2. Description of the Related Art

In contribution to the development of artificial intelligence, numerous drawing software or image generators, introduced with the artificial intelligence technology, are capable of generating user-desired images, and help many media workers (for example, YouTubers or forum hosts) or the general public to strengthen the impression that they make on the audience regarding contents of their published articles and/or situation descriptions.

However, current drawing software or image generators require a user to input a corresponding instruction set (Prompt) in order to generate a user-desired image. That is to say, although a user is able to generate a user-desired image at the end, it is necessary for the user to first input a set of textual descriptions and an instruction set corresponding to each specific retouching operation.

### BRIEF SUMMARY OF THE INVENTION

In view of the description of the prior art given in the background of the invention, it is an object of the present disclosure to solve the issues of the prior art. More specifically, it is an object of the present disclosure to solve the issue that it is necessary for a user to first input a corresponding instruction set before a user-desired image can be generated, and more particularly the issue that it is necessary for a user who is unfamiliar with instruction sets to first input a corresponding instruction set before a user-desired image can be generated.

The present disclosure provides a method for generating an image. The method is suitable for generating an artificial intelligence image by means of a computer device. The method includes receiving at least one input image, generating a keyword character set based on the at least one input image, performing at least one string editing operation on the keyword character set based on a transformation instruction set corresponding to an editing request after receiving the editing request from any of at least one editing button, generating an editing character set, and generating the artificial intelligence image based on the editing character set.

In some embodiments, the generating of a keyword character set based on the at least one input image includes inputting the at least one input image into an image description model, and outputting the keyword character set by the image description model. The image description model automatically generates the keyword character set corresponding to the at least one input image based on the at least one input image.

In some embodiments, the generating of an artificial intelligence image based on the editing character set includes inputting the editing character set into an image generation model, and outputting the artificial intelligence image by the image generation model. The image generation model automatically generates the artificial intelligence image corresponding to the editing character set based on the editing character set.

In some embodiments, the method for generating an image further includes automatically generating at least one editing button according to at least one of contents of the keyword character set and a user history editing record.

In some embodiments, the method for generating an image further includes determining, based on a stack attribute value individually corresponding to each of the at least one editing button, whether to stack at least one string editing operation.

In some embodiments, the stack attribute value is set to be stackable or non-stackable.

In some embodiments, the stack attribute value is set according to at least one of a user preference setting and a default value.

In some embodiments, the method for generating an image further includes determining, based on an editing weight value individually corresponding to each of the at least one editing button, a level of editing performed by at least one string editing operation on the keyword character set.

In some embodiments, the editing weight value is set according to at least one of contents of the keyword character set, a user history editing record, and a default value.

In some embodiments, the method for generating an image further includes receiving object information corresponding to physical dimensions of an object, and determining dimensions of the artificial intelligence image according to the object information.

In some embodiments, the generating of a keyword character set based on the at least one input image includes receiving at least one decorative image, performing a composition operation on the at least one input image and the at least one decorative image, generating a transformed image, inputting the transformed image into an image description model, and outputting the keyword character set by the image description model. The image description model automatically generates a keyword character set corresponding to the transformed image based on the decorative image.

In some embodiments, the method for generating an image further includes transmitting the artificial intelligence image to an image output device, and physically outputting the artificial intelligence image by the image output device.

The present disclosure further provides a method for generating an image. The method is suitable for generating a style transformation image by means of a computer device. The method includes receiving at least one input image, inputting the at least one input image into a style transformation model in response to a style transformation request after receiving the style transformation request sent from any one of at least one style transformation button, and outputting a style transformation image by the style transformation model. The style transformation model performs at least one style transformation operation on the at least one input image based on a style training result of at least one training image, and generates the style transformation image.

In some embodiments, the at least one training image is an artificial intelligence image generated by any one of the methods for generating an image described above.

In some embodiments, the method for generating an image further includes transmitting the style transformation image to an image output device, and physically outputting the style transformation image by the image output device.

The present disclosure further provides a computer device for generating an image. The computer device is suitable to be electrically coupled (either wired or wirelessly) to a user terminal, so as to receive at least one input image from the user terminal and to generate an output image based on the at least one input image. The computer device includes an image reception module, a processing module, and a storage module. The image reception module is configured to be electrically coupled to the user terminal, and configured to be suitable for receiving the at least one input image. The processing module is configured to be electrically coupled to the image reception module, and configured to be able to perform any one of the methods for generating an image described above after executing a program code stored in the storage module so as to generate an artificial intelligence image, or to perform any one of the methods for generating an image described above so as to generate a style transformation image, and to use the artificial intelligence image or the style transformation image as an output image. The storage module is configured to be electrically coupled to the processing module, and configured to have a program code stored therein.

In some embodiments, the computer device for generating an image further includes an image output module. The image output module is configured to be electrically coupled to the processing module, and is suitable for transmitting the output image to the image output device.

The present disclosure further provides a non-transitory computer-readable recording medium for generating an image, which is capable of completing any one of the methods for generating an image described above after a computer device loads and executes a program code stored therein.

The present disclosure further provides a computer program product for generating an image, which is capable of completing any one of the methods for generating an image described above after a computer device loads the computer program product and executes the computer program product.

Advantageous effects that could not be achieved by the prior art can be produced by the technical means provided by the present disclosure. More specifically, one advantageous effect of the present disclosure is that, a user-desired image file can be generated without needing the user to additionally input an instruction set, so that operation thresholds and/or operation complications are lowered for the user, further enabling a user unfamiliar with instruction sets to be able to also generate a user-desired image file by means of the technical means of the present disclosure.

### BRIEF DESCRIPTION OF THE DRAWINGS

FIG. 1 is a schematic diagram of a connection relationship between a computer device electrically coupled to at least one of a user device and a server and electrically coupled to at least one of an image output device and a server according to an embodiment of the present disclosure.
FIG. 2 is a block schematic diagram of a processing module according to an embodiment of the present disclosure.
FIG. 3 is a flowchart of a method for generating an image according to an embodiment of the present disclosure.
FIG. 4A is a detailed flowchart of generating a keyword character set based on at least one input image in an embodiment of the present disclosure.
FIG. 4B is a detailed flowchart of generating an artificial intelligence image based on an editing character set in an embodiment of the present disclosure.
FIG. 5 is a schematic diagram of a result generated after performing steps of an embodiment of the present disclosure.
FIG. 6 is a schematic diagram of a display screen of a user device according to an embodiment of the present disclosure.
FIG. 7 is a flowchart of a method for generating an image according to an embodiment of the present disclosure.
FIG. 8 is a schematic diagram of a result generated after performing steps of an embodiment of the present disclosure.
FIG. 9 is a schematic diagram of a result generated after performing steps of an embodiment of the present disclosure.
FIG. 10 is a flowchart of a method for generating an image according to an embodiment of the present disclosure.
FIG. 11 is a detailed flowchart of generating a keyword character set based on at least one input image in an embodiment of the present disclosure.
FIG. 12 is a flowchart of a method for generating an image according to an embodiment of the present disclosure.
FIG. 13 is a block schematic diagram of a processing module according to an embodiment of the present disclosure.
FIG. 14 is a flowchart of a method for generating an image according to an embodiment of the present disclosure.
FIG. 15 is a schematic diagram of results of different style transformation images transferred from at least one input image according to an embodiment of the present disclosure.
FIG. 16 is a schematic diagram of a display screen of a user device according to an embodiment of the present disclosure.
FIG. 17 is a flowchart of a method for generating an image according to an embodiment of the present disclosure.

### DETAILED DESCRIPTION OF THE INVENTION

In the following disclosure of the present disclosure, details of the present disclosure are given by way of the embodiments with reference to the accompanying drawings, so as to help a person skilled in the technical field pertinent to the present disclosure to better understand the objects, features, and effects of the present disclosure. It should be noted that, the various steps described herein can be performed sequentially, in a reverse order, or by appropriately changing or skipping an order during a control process. It should be noted that, the expression "a first step can be performed subsequent to a second step" described herein can mean that the first step follows after the second step is completely performed, or can mean that another step (for example, a third step) follows after the second step is completely performed and the first step follows subsequently.

Moreover, in the description of the present disclosure, it should be noted that the terms such as "first", "second", and "third" are used to distinguish differences among elements, and are not to be construed as limitations to the elements themselves and specific orders of the elements. It should be noted that, in the description below, the same elements or steps can be represented by the same symbols or numerals.

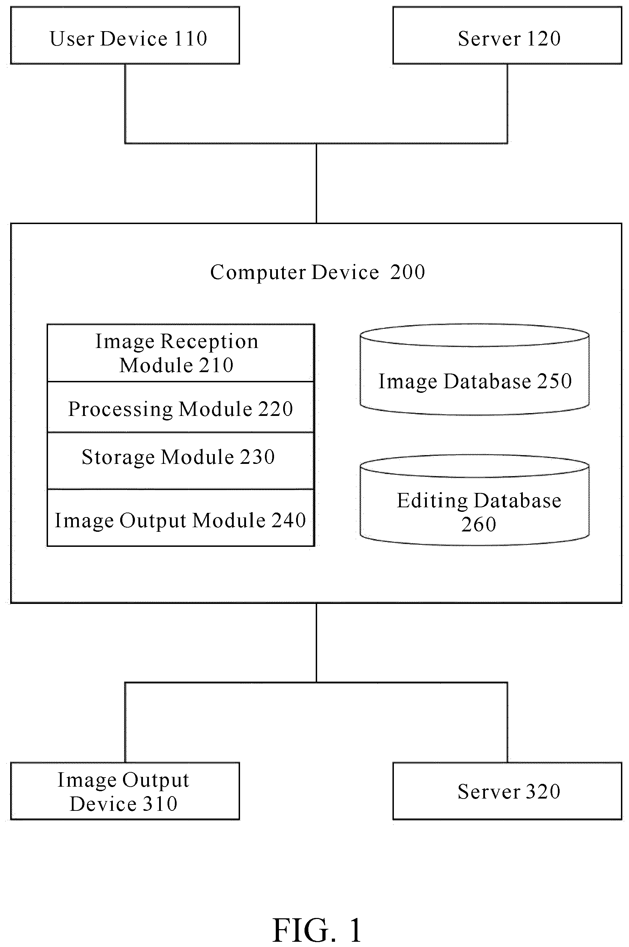

Referring to FIG. 1, FIG. 1 shows a schematic diagram of a connection relationship between a computer device 200 electrically coupled to at least one of a user device 110 and a server 120 and electrically coupled to at least one of an image output device 310 and a server 320 according to an embodiment of the present disclosure.

The user device 110 and/or the server 120 can be configured to be electrically coupled to the computer device 200, and more specifically, a signal line is configured between the user device 110 and/or the server 120 and the computer device 200. Thus, the user device 110 and/or the server 120 is suitable for providing an input image (specifically, at least one input image) to the computer device 200 through the signal line. In some embodiments, the input image can be, for example but not limited to, provided by a co-branded vendor, an artist, or a consumer. In some embodiments, the input image can be, for example but not limited to, a picture of a portrait, a fruit, an animal, an anime character, or an original character. In a specific example, a user can provide the computer device 200, by means of the user device 110, with one or more picture files as the input image.

In some embodiments, the computer device 200 can receive the input image from the user device 110 and/or the server 120 through a connection of a physical signal line, wherein the physical signal line can be, for example but not limited to, a network signal line in compliance with the Internet protocol. In some other embodiments, the computer device 200 can also receive the input image from the user device 110 and/or the server 120 through means other than a connection of a physical signal line. More specifically, the computer device 200 can also receive the input image from the user device 110 and/or the server 120 through a connection of a virtual signal line, wherein the virtual signal line can be, for example but not limited to, Wi-Fi, 4G/5G, Bluetooth, Near-Field Communication (NFC) in compliance with wireless communication protocols.

In some embodiments, the user device 110 can be a computer device capable of storing files, and is specifically, for example but not limited to, a smartphone, a tablet computer, or a personal computer. In some embodiments, the server 120 can be a computer device capable of storing files, and is specifically, for example but not limited to, a physical host or a virtual cloud server.

The computer device 200 can be configured to receive the input image from the user device 110 and/or the server 120, and configured to generate an artificial intelligence image based on the input image received, and specifically, to generate an artificial intelligence image and/or a style transformation image by performing the steps of methods for generating an image provided by the present disclosure. In some embodiments, the input image can also be stored in advance in the computer device 200, such that the computer device 200 can also generate an artificial intelligence image and/or a style transformation image based on the input image stored in the computer device 200.

The computer device 200 can fundamentally be configured to include an image reception module 210, a processing module 220 (that is, at least one of a processing module 220A and a processing module 220B), and a storage module 230. In some embodiments, the computer device 200 can further include an image output module 240. In some other embodiments, the computer device 200 can further include an image database 250. In some other embodiments, the computer device 200 can further include an editing database 260. That is to say, the image output module 240, the image database 250, and the editing database 260 can be selectively configured in the computer device 200 according to user requirements.

The image reception module 210 can be configured to be electrically coupled to the user device 110 and/or the server 120, and be configured to be suitable for receiving the input image (specifically, at least one input image) from the user device 110 and/or the server 120. In some other embodiments, the computer device 200 can store the input image received from the user device 110 and/or the server 120 into the image database 250 by the image reception module 210.

The processing module 220 can be configured to be electrically coupled to the image reception module 210, and be configured to be able to implement any one of the methods for generating an image provided by the present disclosure. More specifically, the processing module 220 can be configured, after performing the various steps of the methods for generating an image provided by the present disclosure, to generate an artificial intelligence image and/or a style transformation image based on the input image. In some embodiments, the processing module 220 can be a central processing unit (CPU), which is specifically, for example but not limited to, any type of processor generally known to a person skilled in the technical field pertinent to the present disclosure.

In some embodiments, the processing module 220 can refer to the processing module 220A capable of generating an artificial intelligence image based on the input image. In some other embodiments, the processing module 220 can refer to the processing module 220B capable of generating a style transformation image based on the input image. In some other embodiments, the configurations and functions of the processing module 220A and the processing module 220B can be integrated into the same processing module, such that the processing module is capable of generating an artificial intelligence image based on the input image as well as generating a style transformation image based on the input image.

The storage module 230 can be configured to be electrically coupled to the processing module 220 (including the processing module 220A and/or the processing module 220B), and be configured to have a program code stored therein, such that the processing module 220 is capable of performing the various steps of the methods for generating an image provided by the present disclosure after loading and executing the program code. In some embodiments, the storage module 230 can fundamentally be configured to include a volatile memory (specifically, at least one volatile memory) and a non-volatile memory (specifically, at least one non-volatile memory). In some embodiments, the volatile memory can be any type of memory generally known to a person skilled in the technical field pertinent to the present disclosure, for example but not limited to, a dynamic random access memory (DRAM) or a static random access memory (SRAM). In some embodiments, the non-volatile memory can be any type of memory generally known to a person skilled in the technical field pertinent to the present disclosure, for example but not limited to, a read-only memory (ROM), a flash memory or a non-volatile random access memory (NVRAM).

The image output module 240 can be configured to be electrically coupled to the processing module 220 (including the processing module 220A and/or the processing module 220B), and be configured to output an image generated by the processing module 220. In some embodiments, the image output module 240 can output the artificial intelligence image generated by the processing module 220A and/or the style transformation image generated by the processing module 220B to the image output device 310 and/or the server 320.

In some other embodiments, the artificial intelligence image generated by the processing module 220A and/or the style transformation image generated by the processing module 220B can be stored in the image database 250. After the processing module 220A and/or the processing module 220B receives an image output request, the processing module 220A and/or the processing module 220B can respectively output the artificial intelligence image and/or the style transformation image stored in the image database 250 to the image output device 310 and/or the server 320.

The image database 250 can be configured to store an image, which is, for example but not limited to, the input image, the artificial intelligence image, and/or the style transformation image. In some embodiments, a file format of the image stored in the image database 250 can be, for example but not limited to, Joint Photographic Experts Group (JPEG), Portable Network Graphics (PNG), Bit Image Format / Bitmap (BMP), Graphics Interchange Format (GIF), or Tagged Image File Format (TIFF).

The editing database 260 can be configured to store a user history editing record, which can be, for example but not limited to, a historical record of a string editing operation and/or a historical record of a style transformation operation, and more particularly, a historical record of a string editing operation and/or a historical record of a style transformation operation corresponding to the input image. In some embodiments, the user history editing record can also include a timing at which the string editing operation and/or the style transformation operation is performed.

The computer device 200 is configured to be electrically coupled to the image output device 310 and/or the server 320, and specifically, a signal connection is configured between the computer device 200 and the image output device 310 and/or the server 320. Thus, the computer device 200 is suitable for outputting the artificial intelligence image to the image output device 310 and/or the server 320 through the signal connection.

In some embodiments, the computer device 200 can output the artificial intelligence image to the image output device 310 and/or the server 320 through a connection of a physical signal line, wherein the physical signal line can be, for example but not limited to, a network signal line in compliance with the Internet protocol. In some other embodiments, the computer device 200 can also output the artificial intelligence image to the image output device 310 and/or the server 320 through means other than a connection of a physical signal line. More specifically, the computer device 200 can also output the artificial intelligence image to the image output device 310 and/or the server 320 through a connection of a virtual signal line, wherein the virtual signal line can be, for example but not limited to, Wi-Fi, 4G/5G, Bluetooth, or Near-Field Communication (NFC) in compliance with wireless communication protocols.

Thus, in addition to being capable of generating an artificial intelligence image and/or a style transformation image based on the received input image, the computer device 200 shown in FIG. 1 further enables a user to generate the artificial intelligence image and/or the style transformation image without needing the user to additionally input an instruction set. That is to say, the computer device for generating an image provided by the present disclosure lowers operation thresholds and/or operation complications for a user, further enabling a user unfamiliar with instruction sets to also be able to generate a user-desired image file by means of the computer device.

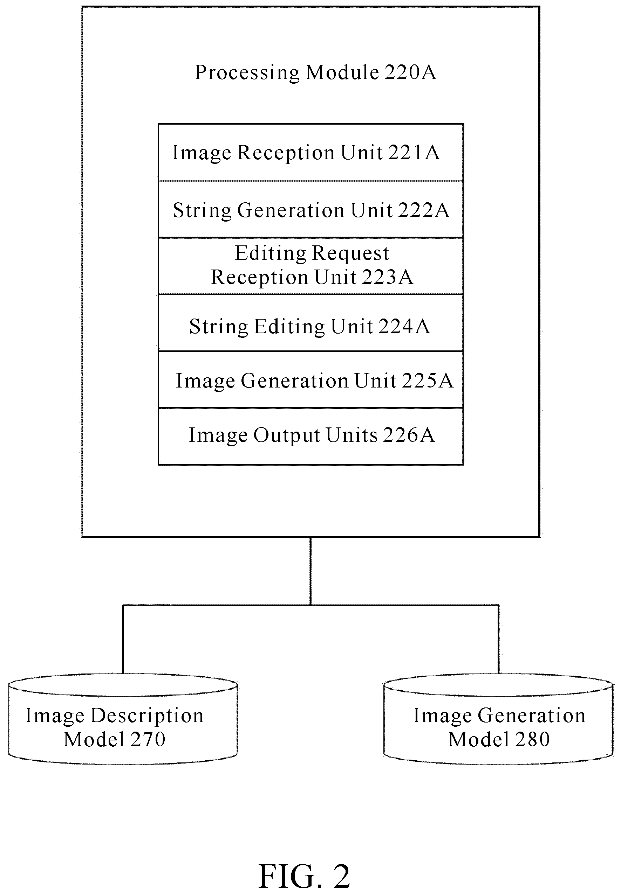

Referring to FIG. 2, FIG. 2 shows a block schematic diagram of the processing module 220A according to an embodiment of the present disclosure. The processing module 220A can be configured to fundamentally the same as the processing module 220 shown in FIG. 1, and differs in that, the processing module 220A can be configured to generate the artificial intelligence image based on the input image, and the function and configuration of generating the style transformation image based on the input image can be omitted.

The processing module 220A can fundamentally be configured to include an image reception unit 221A, a string generation unit 222A, an editing request reception unit 223A, a string editing unit 224A, an image generation unit 225A and an image output unit 226A. In some embodiments, the processing module 220A can further include an image description model 270. In some embodiments, the processing module 220A can further include an image generation model 280. That is to say, the image description model 270 and/or the image generation model 280 can be selectively configured in the processing module 220A according to user requirements. In some embodiments, the function and configuration of the image description model 270 can be integrated in the string generation unit 222A. In some embodiments, the function and configuration of the image generation model 280 can be integrated in the image generation unit 225A.

The image reception unit 221A can be configured to be suitable for receiving the input image (specifically, at least one input image) from the user device 110 and/or the server 120 by the image reception module 210. In some embodiments, the image reception unit 221A can also be configured to receive the input image from the image database 250, that is to say, the input image can be stored in advance in the image database 250 through the image reception module 210, such that the image reception unit 221A can also receive the input image from the image database 250.

The string generation unit 222A can be configured to generate the keyword character set based on the input image. More specifically, the string generation unit 222A can be configured to generate the keyword character set based on the input image received by the image reception unit 221A. In some embodiments, the string generation unit 222A can input the input image to the image description model 270, and automatically generate and output the keyword character set by the image description model 270. In some embodiments, the image description model 270 can be, for example but not limited to, a Clip model or DeepBooru.

More specifically, the Clip model is a deep learning model that is trained in advance by a plurality of sets of data (each set of data including training images and corresponding training strings), such that the trained Clip model is capable of matching the input image with a corresponding string after it identifies the input image received. DeepBooru is also a deep learning model that is trained in advance by a plurality of sets of data (each set of data including training images and corresponding training strings), such that the trained DeepBooru is similarly capable of matching the input image with a corresponding string (that is, the keyword character set) after it identifies the input image received.

Both of the Clip model and DeepBooru are capable of generating a corresponding string based on an image, and the two differ in that, the DeepBooru is capable of directly generating a keyword character set corresponding to the input image, whereas the Clip model generates a complete string corresponding to the input image (and then a keyword character set is generated based on the complete string generated by the Clip model). In some embodiments, for example but not limited to, the Clip model can coordinate with a large language model such as ChatGPT to generate a keyword character set based on the complete string generated by the Clip model.

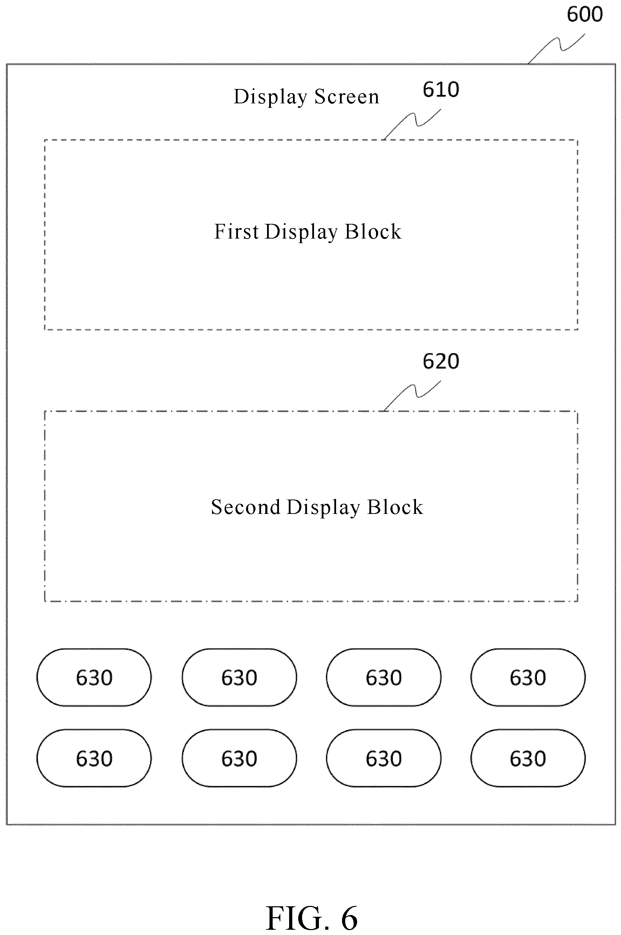

The editing request reception unit 223A can be configured to receive an editing request sent by an editing button (for example, editing buttons 630 shown in FIG. 6). That is to say, when a user selects any one of at least one editing button, the selected editing button sends a corresponding editing request, such that the editing request reception unit 223A can receive an editing request corresponding to the selected editing button.

The string editing unit 224A can be configured to perform a string editing operation on the keyword character set. Specifically, the string editing unit 224A can be configured to perform a string editing operation on the keyword character set generated by the string generation unit 222A. More specifically, the string editing unit 224A can be configured to perform a string editing operation on the keyword character set generated by the string generation unit 222A after the editing request reception unit 223A receives an editing request sent by any one of the at least one editing button, and generate an editing character set. The string editing operation can include, for example but not limited to, adding, editing, and/or deleting. In some embodiments, the string editing operation can be determined in advance according to the individual editing buttons 630 shown in FIG. 6, and so the string editing unit 224A can generate the editing character set according to the string editing operations corresponding to the editing buttons 630 shown in FIG. 6.

The image generation unit 225A can be configured to generate the artificial intelligence image based on the editing character set. More specifically, the image generation unit 225A can be configured to generate the artificial intelligence image based on the editing character set generated by the string editing unit 224A. In some embodiments, the image generation unit 225A can input the editing character set into the image generation model 280, and automatically generate and output the artificial intelligence image by the image generation model 280. In some embodiments, the image generation model 280 can be any model capable of generating an image based on a string and generally known to a person skilled in technical field pertinent to the present disclosure, for example but not limited to, Stable Diffusion.

Stable Diffusion is a deep learning model that is trained in advance by a plurality of sets of data (each set of data including training strings and corresponding training images), such that the trained Stable Diffusion is capable of generating a corresponding artificial intelligence image corresponding to a received editing character set based on the editing character set after the editing character set is identified.

The image output unit 226A can be configured to output the artificial intelligence image generated by the image generation unit 225A. In some embodiments, the image output unit 226A can store the artificial intelligence image in a specific format in the image database 250. In some embodiments, the image output unit 226A can output the artificial intelligence image in a specific format to the image output device 310 and/or the server 320 by the image output module 240.

Thus, in addition to being capable of generating an artificial intelligence image based on the received input image, the processing module 220A shown in FIG. 2 further enables a user to generate the artificial intelligence image without needing the user to additionally input an instruction set. That is to say, the computer device for generating an image provided by the present disclosure lowers operation thresholds and/or operation complications for a user, further enabling a user unfamiliar with instruction sets to also be able to generate a user-desired image file by means of the computer device.

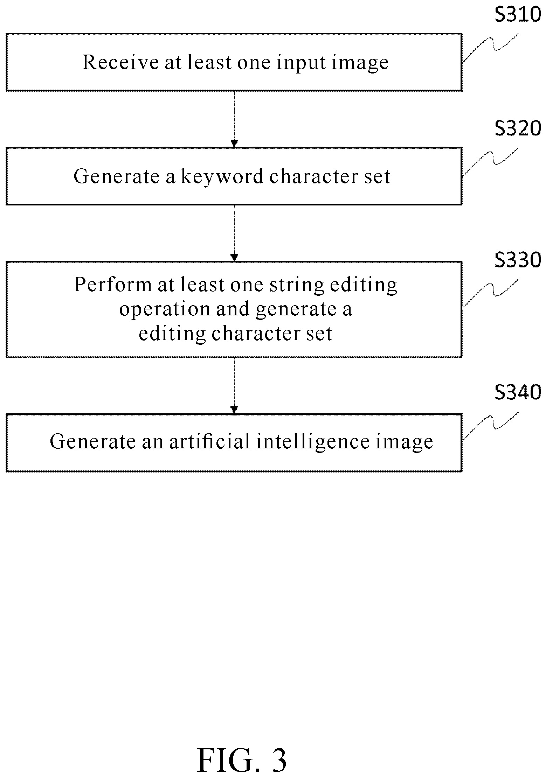

Referring to FIG. 3, FIG. 3 shows a flowchart of a method for generating an image according to an embodiment of the present disclosure. More specifically, the method shown in FIG. 3 is capable of generating an artificial intelligence image, and includes steps S310, S320, S330 and S340. In some embodiments, the method shown in FIG. 3 can use Visual Studio Code as a development environment and coordinate with the architecture of pytorch and huggingface diffusers using Python as a programming language to implement the method. In some embodiments, the method shown in FIG. 3 can use source libraries such as torch, diffusers, and numpy.

In step S310, an input image (specifically, at least one input image) is received. Step S310 can be performed by means of the image reception unit 221A of the processing module 220A shown in FIG. 2. In some embodiments, the input image can be an original image file (that is, an image file having not undergone any image processing operations), for example but not limited to, a picture file obtained by a camera module (not shown). In some other embodiments, the input image can also be an image file having undergone an image processing operation (specifically, at least one image processing operation), for example but not limited to, an image file obtained by means of an image processing model such as Photoshop. In some embodiments, the image processing operation can include, for example but not limited to, a de-backing operation, an image resizing operation, an image mirror flipping operation, or an image rotation operation.

In step S320, a keyword character set is generated based on the input image. Step S320 can be performed by means of the string generation unit 222A of the processing module 220A shown in FIG. 2. In some embodiments, step S320 can be performed subsequent to step S310. In some embodiments, after step S310 is performed, an image processing operation can be first performed on the input image and then step S320 is performed (that is, generating a keyword character set based on the input image having undergone the image processing operation).

In some embodiments, a pre-established image recognition model (not shown) can be used to analyze the input image, so as to recognize main elements and/or other elements (that is, non-main elements) in the input image, further generating the keyword character set based on the various elements in the input image. More specifically, for example, ControlNet-openpose can be used to analyze hand gestures and limb actions in the input image, and ControlNet-Canny can be used to analyze object edge detection and border drawing of the input image, further generating the keyword character set according to the analysis results.

In step S330, a string editing operation (specifically, at least one string editing operation) is performed on the keyword character set based on an editing instruction set corresponding to an editing request after the editing request is received from any one of editing buttons (specifically, at least one editing button), and an editing character set is generated. Step S330 can be performed by means of the editing request reception unit 223A and the string editing unit 224A of the processing module 220A shown in FIG. 2. In some embodiments, step S330 can be performed subsequent to step S320.

In some embodiments, the editing buttons can be pre-established for a user to perform an operation on the input image by means of any one of the editing buttons (that is, performing the string modifying operation on the keyword character set corresponding to the input image). In some embodiments, the number of the editing buttons can be multiple, so as to allow a user to select a suitable editing button in a situation for better user experience. In some embodiments, by editing tag details corresponding to each of the editing buttons, a user is allowed to more intuitively learn, according to the tag details, an expected result that can be generated after the string editing operation is performed on the keyword character set by each of the editing buttons.

In a specific example, the editing buttons can include a first editing button (with the tag details showing an American style), a second editing button (with the tag details showing a Japanese style), and a third editing button (with the tag details showing a Ghibli style). When a user selects the third editing button, the third editing button can issue an editing request, such that after the editing request reception unit 223A receives the editing request sent by the third editing button, the string editing unit 224A can perform the string editing operation on the keyword character set based on the editing instruction set corresponding to the editing request (that is, adding textual description "Ghibli" to the contents of the keyword character set).

More specifically, a user can select the third editing button (with tag details showing a Ghibli style) to switch to a pre-training model (base model) most suitable for this style and a style fine-tuning layer (Low Rank Adaptation (LoRA) layer), and select a most suitable model and parameters after testing for further combination, so as to generate an instruction set corresponding to the third editing button and perform the string modifying operation on the keyword character set according to the instruction set.

Thus, with step S330, the string editing operation can be performed without needing a user to additionally input an instruction set. That is to say, operation thresholds and/or operation complications can be lowered for a user by the step above, such that a user unfamiliar with instruction sets is also able to perform the string editing operation on the keyword character set corresponding to the input image by means of directly selecting the editing buttons.

In some embodiments, step S330 can be performed once or multiple times. That is to say, the processing module 220A can perform step S330 once or multiple times. In some embodiments, the number of times of step S330 performed by the processing module 220A can be determined by the number of times of selecting the editing buttons by a user. More specifically, after a user selects any one of the editing buttons such that the processing module 220A performs step S330 and generates the editing character set, the user can again select any one of the editing buttons such that the processing module 220A again performs step S330 and generates a new editing character set (that is, using a previously generated editing character set as a current keyword character set and performing the string editing operation on the current keyword character set). In some embodiments, after the processing module 220A receives a restore request, the processing module 220A can restore the current editing character set to the keyword character set or an old editing character set (wherein the old editing character set can be the editing character set before the latest modification, that is, the editing character set before the latest string editing operation is performed). In some embodiments, when the processing module 220A successively receives the same editing request, the processing module 220A performs the corresponding string editing operation on the keyword character set or the current editing character set only after the first editing request is received. That is, after receiving the second, third, ...Nth editing requests, the processing module 220A no longer performs the corresponding string editing operation on the current editing character set.

In step S340, an artificial intelligence image is generated based on the editing character set. Step S340 can be performed by means of the image generation unit 225A of the processing module 220A shown in FIG. 2. In some embodiments, step S340 can be performed subsequent to step S330.

Thus, in addition to being capable of generating an artificial intelligence image based on the received input image, the method shown in FIG. 3 further enables a user to generate the artificial intelligence image without needing the user to additionally input an instruction set. That is to say, the computer device for generating an image provided by the present disclosure lowers operation thresholds and/or operation complications for a user, further enabling a user unfamiliar with instruction sets to also be able to generate a user-desired image file by means of the computer device.

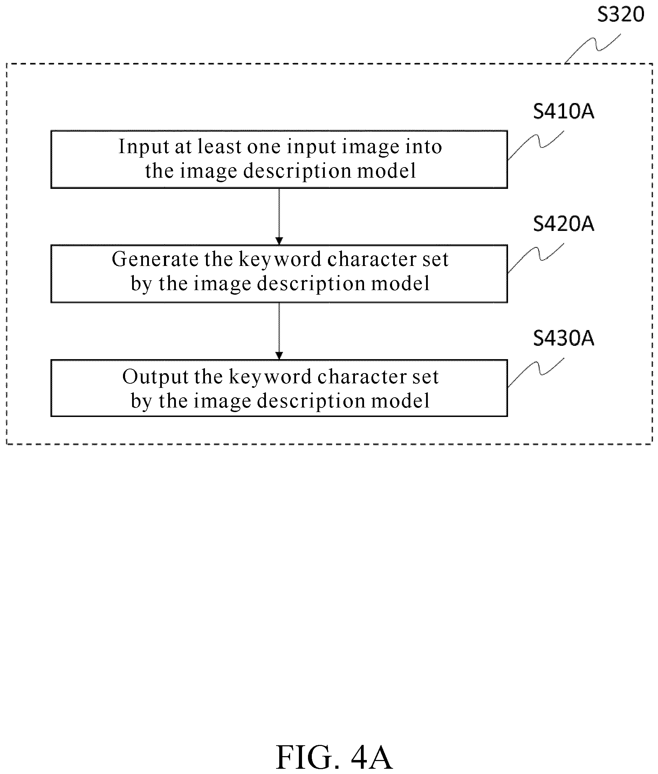

Referring to FIG. 4A, FIG. 4A shows a detailed flowchart of generating a keyword character set based on at least one input image (that is, step S320) in an embodiment of the present disclosure. That is to say, step S320 in FIG. 3 can include steps S410A, S420A, and S430A, and step S320 can be completed by performing steps S410A, S420A, and S430A. Steps S410A, S420A, and S430A can be performed by the string generation unit 222A and the image description model 270 of the processing module 220A shown in FIG. 2.

In step S410A, the input image is input into the image description model 270. In some embodiments, step S410A can be performed subsequent to step S310. In some embodiments, the image description model 270 can be, for example but not limited to, a Clip model or DeepBooru.

In step S420A, the keyword character set is generated by the image description model 270. In some embodiments, step S420A can be performed subsequent to step S410A. The image description model 270 is trained in advance by a plurality of sets of data (each set of data including training images and corresponding training strings), and so after the input image is identified, the trained image description model 270 is capable of automatically and more accurately generating the keyword character set corresponding to the input image based on the input image.

In step S430A, the keyword character set is output by the image description model 270. In some embodiments, step S430A can be performed subsequent to step S420A. That is to say, by performing step S430A, the processing module 220A is allowed to further perform a subsequent process (that is, step S330) for the keyword character set generated and output by the image description model 270.

In some embodiments, step S420A and step S430A can be integrated into one step, that is, generating and outputting the keyword character set by the image description model 270.

Thus, by performing the steps shown in FIG. 4A, the keyword character set corresponding to the input image can be automatically and more accurately generated based on the input image.

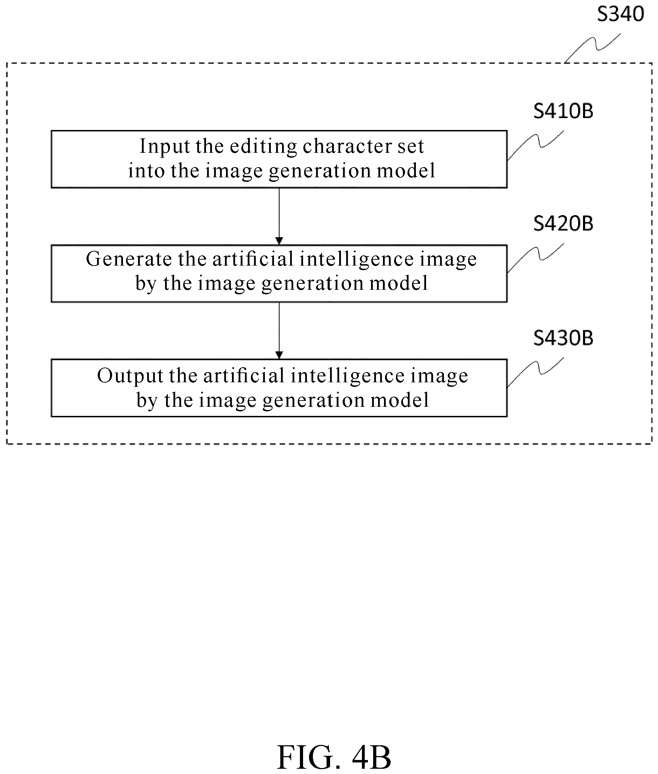

Referring to FIG. 4B, FIG. 4B shows a detailed flowchart of generating an artificial intelligence image based on an editing character set (that is, step S340) in an embodiment of the present disclosure. That is to say, step S340 in FIG. 3 can include steps S410B, S420B, and S430B, and step S340 can be completed by performing steps S410B, S420B, and S430B. Steps S410B, S420B, and S430B can be performed by the image generation unit 225A and the image generation model 280 of the processing module 220A shown in FIG. 2.

In step S410B, the editing character set is input into the image generation model 280. In some embodiments, step S410B can be performed subsequent to step S330. In some embodiments, the image generation model 280 can be any model capable of generating an image based on a string and generally known to a person skilled in technical field pertinent to the present disclosure, for example but not limited to, Stable Diffusion.

In step S420B, the artificial intelligence image is generated by the image generation model 280. In some embodiments, step S420B can be performed subsequent to step S410B. The image generation model 280 is trained in advance by a plurality of sets of data (each set of data including training strings and corresponding training images), and so after the received editing character set is identified, the trained image generation model 280 is capable of generating the artificial intelligence image corresponding to the editing character set based on the editing character set.

In step S430B, the artificial intelligence image is output by the image generation model 280. In some embodiments, step S430B can be performed subsequent to step S420B. That is to say, by performing step S430B, the computer device 200 is allowed to further perform a subsequent process (for example but not limited to, displaying the artificial intelligence image on a screen of a user device or outputting the artificial intelligence image to an image output device) on the artificial intelligence image generated and output by the image generation model 280.

In some embodiments, step S420B and step S430B can be integrated into one step, that is, generating and outputting the artificial intelligence image by the image generation model 280.

Thus, by performing the steps shown in FIG. 4B, the artificial intelligence image corresponding to the editing character set can be automatically and more accurately generated based on the editing character set.

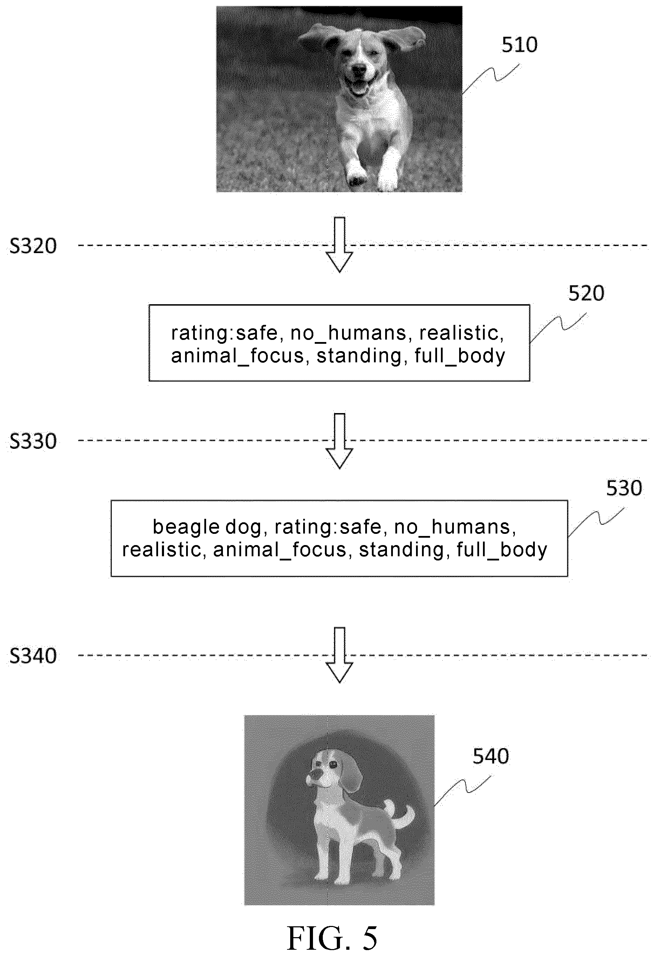

Referring to FIG. 5, FIG. 5 shows a schematic diagram of a result generated after performing steps of an embodiment of the present disclosure. More specifically,

FIG. 5 shows an artificial intelligence image 540 generated based on an input image 510 by performing steps S310, S320, S330 and S340 shown in FIG. 3 by the processing module 220A, with the details of the individual steps given in the following description.

First of all, the processing module 220A receives the input image 510 from the user device 110 and/or the server 120 by means of the image reception module 210 by performing step S310. Secondly, the processing module 220A generates a keyword character set 520 based on the received input image 510 by performing step S320. Next, the processing module 220A performs a string editing operation on the keyword character set 520 (that is, adding textual description "beagle dog" to the contents of the keyword character set 520) based on an editing instruction set corresponding to an editing request after the editing request sent from any one of the editing buttons 630 shown in FIG. 6 is received, and generates an editing character set 530. Lastly, the processing module 220A generates the artificial intelligence image 540 based on the editing character set 530 by performing step S340.

Referring to FIG. 6, FIG. 6 shows a schematic diagram of a display screen 600 of a user device according to an embodiment of the present disclosure. The display screen 600 of the user device can fundamentally include a first display block 610 and editing buttons 630 (specifically, at least one editing button 630). In some embodiments, the display screen 600 of the user device can further include a second display block 620. It should be noted that, the configuration relationship among the elements shown in FIG. 6 (for example, relative sizes and/or relative positions) can be adjusted according to user requirements; that is to say, the configuration relationship shown in FIG. 6 is merely an illustrative example.

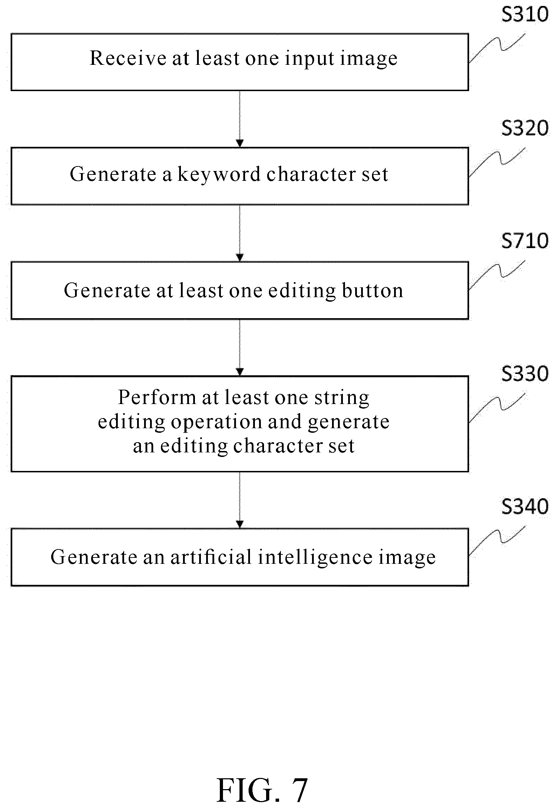

The editing buttons 630 are for a user to perform an editing operation on the input image 510 by means of selecting any one of the editing buttons 630 (that is, performing the string editing operation on the keyword character set 520 corresponding to the input image 510). In some other embodiments, the editing buttons 630 can be pre-established. In some other embodiments, the editing buttons 630 can be automatically established according to at least one of contents of the keyword character set 520 and a user history editing record (for example, step S710 shown in FIG. 7). In some embodiments, the number of the editing button 630 can be multiple in number, so as to allow a user to select a suitable editing button 630 in a situation for better user experience. In some embodiments, by editing tag details corresponding to at least one editing button 630, a user is allowed to more intuitively learn, according to the tag details, an expected result that can be generated after the string editing operation is performed on the keyword character set 520 by each of the editing buttons 630.

In some embodiments, the first display block 610 can be configured to display the artificial intelligence image 540. More specifically, after a user selects any one of the editing buttons 630, the user can be aware of the artificial intelligence image 540 generated through the first display block 610. Thus, with the display contents of the first display block 610, a user can evaluate whether the current artificial intelligence image 540 meets user expectations, and determine whether to again generate a new artificial intelligence image 540 by means of the editing button 630.

In some embodiments, the second display block 620 can be configured to display at least one of the keyword character set 520 and the editing character set 530. That is to say, the second display block 620 can first display the keyword character set 520, and the second display block 620 can display the editing character set 530 after the string editing operation is performed. In some embodiments, the second display block 620 can be omitted. That is to say, the display screen 600 of the user device can display only the first display block 610 and the editing buttons 630 but not the second display block 620, thereby providing a user with better user experience.

Referring to FIG. 7, FIG. 7 shows a flowchart of a method for generating an image according to an embodiment of the present disclosure. More specifically, the method shown in FIG. 7 is capable of generating an artificial intelligence image, and includes steps S310, S320, S330, S340, and S710. Steps S310, S320, S330, and S340 are fundamentally the same as those shown in FIG. 3. That is to say, the method shown in FIG. 7 can include steps S310, S320, S330, and S340 fundamentally the same as those in FIG. 3, and further include step S710.

In step S710, editing buttons (specifically, at least one editing button) can be automatically generated according to at least one of contents of the keyword character set and the user history editing record. Step S710 can be performed by means of a button generating unit (not shown) of the processing module 220A. In some embodiments, step S710 can be performed subsequent to step S320. In some embodiments, the editing buttons can be automatically generated by a text analysis model according to the contents of the keyword character set. In some embodiments, the text analysis model can be, for example but not limited to, BERTScore.

BERTScore is a text analysis model capable of automatically evaluating a similarity degree between two texts. Thus, by calculating respective scores of the keyword character set and other character sets by BERTScore and providing an editing character set closest to the current keyword character set by BERTScore, an editing button for the editing character set can be automatically generated based on the keyword character set.

In a specific example, when the contents of the keyword character set are "cat, rating: safe, animal, no_humans, simple_background, realistic, animal_focus, looking_at_viewer, black_background", since BERTScore can calculate a Ghibli style score of 0.7, a Picasso style score of 0.2, and an oil painting style score of 0.1, BERTScore can automatically generate a fourth editing button (with tag details showing a Ghibli style), a fifth editing button (with tag details showing a Picasso style) and a sixth editing button (with tag details showing an oil painting style).

In some embodiments, the editing buttons can be automatically generated according to the user history editing record stored in the editing database 260. For example, a string editing operation more frequently used by a user can be calculated according to the user history editing record, further generating the editing buttons according to the string editing operation more frequently used by the user.

Thus, the editing buttons suitable for a user can be automatically generated according to usage conditions of the user by step S710 shown in FIG. 7, for the user to more effectively select the suitable editing button to perform the string editing operation on the keyword character set corresponding to the input image and to generate an artificial intelligence image.

In some embodiments, step S710 can further automatically generate the editing buttons according to the contents of the editing character set. That is to say, after step S330 is performed, step S710 can again be performed so as to automatically generate the editing buttons according to at least one of the contents of the editing character set and the user history modification record.

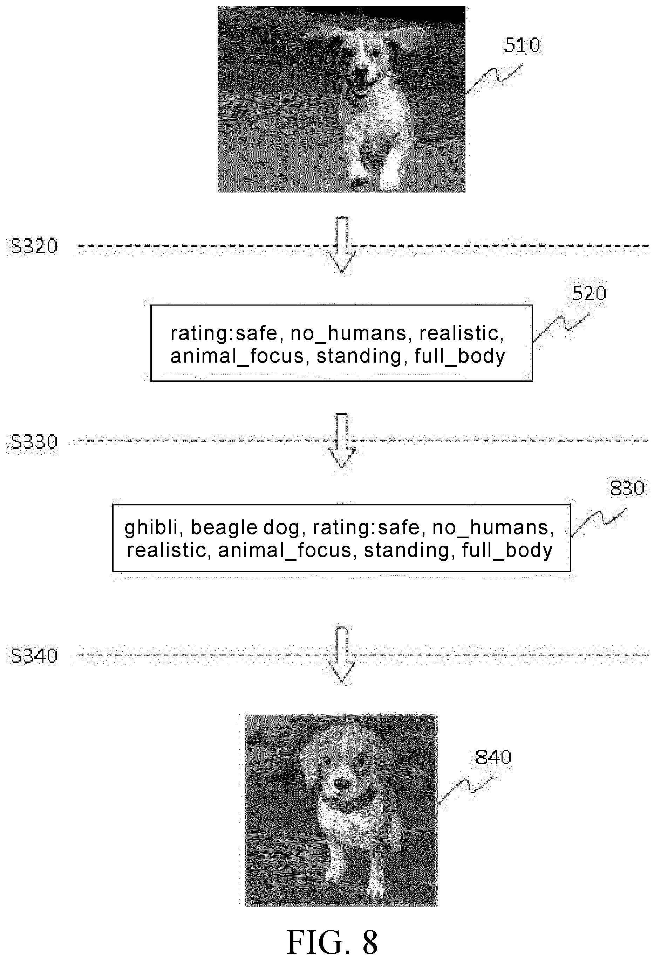

Referring to FIG. 8, FIG. 8 shows a schematic diagram of a result generated after performing steps of an embodiment of the present disclosure. More specifically, FIG. 8 shows an artificial intelligence image 840 generated based on the input image 510 by performing steps S310, S320, S330, and S340 shown in FIG. 3 by the processing module 220A, with the details given in the following description.

Since a user can individually select the editing buttons to cause the processing module 220A to individually perform the corresponding string editing operation, in some embodiments, each of the editing buttons can have an own stack attribute value so that the processing module 220A can determine, based on the stack attribute value corresponding to each of the editing buttons, whether to stack the string editing operation when step S330 is performed. That is to say, the stack attribute value can be configured to determine whether the individual string editing operations can be stacked with one another. Because the processing module 220A can determine, based on the stack attribute values, whether the individual string editing operations can be stacked with one another, the processing module 220A can stack the string editing operations that are stackable, for a user to be able to generate an even more diversified artificial intelligence image. Meanwhile, the string editing operations that are non-stackable prevent a user from selecting editing buttons having opposite effects and hence from generating any artificial intelligence images going beyond user expectations.

Referring to both FIG. 5 and FIG. 8, the processing module 220A performs, by performing step S330, a string editing operation on the keyword character set 520 (that is, adding textual description "beagle dog" to the contents of the keyword character set 520) based on an editing instruction set corresponding to an editing request after the editing request sent from any one of the editing buttons 630 shown in FIG. 6 is received, and generates an editing character set 530 shown in FIG. 5. If the user again selects, from the editing buttons 630, any one of the editing buttons 630 whose stack attribute value is set as stackable, the processing module 220A again performs step S330 to perform a string editing operation on the editing character set 530 shown in FIG. 5 (that is, adding textual description "Ghibli" to the contents of the editing character set 530 shown in FIG. 5) based on an editing instruction set corresponding to an editing request after the editing request is received from the editing button 630 whose stack attribute value is set as stackable, and generate an editing character set 830 shown in FIG. 8. That is to say, the editing character set 830 shown in FIG. 8 is generated in response to the two user-selected editing buttons whose stack attribute values are set as stackable. Lastly, the processing module 220A generates the artificial intelligence image 840 based on the editing character set 830 by performing step S340, thereby generating a more diversified artificial intelligence image.

In some embodiments, the stack attribute values can be individually set as stackable and non-stackable, so as to more readily determine whether the individual string editing operations can be stacked with one another. In some other embodiments, the stack attribute values determined as stackable with one another can be set with a same set code, and it can be determined according to the classification of the set code whether the individual string editing operations can be stacked with one another. For example, the same set code indicates that the individual string editing operations can be stacked with one another, and different set codes indicate that the string editing operations cannot be stacked with one another. Thus, it can be carefully and precisely determined whether the individual string editing operations can be stacked with one another.

In some embodiments, the stack attribute value can be set according to at least one of a user preference setting and a default value. In a specific example, the stack attribute can be set according to a default value. For example, a seventh editing button (with tag details showing a Ghibli style) and an eighth editing button (with tag details showing an American style) are set as stackable, and a ninth editing button (with tag details showing a Japanese style) and a tenth editing button (with tag details showing a realistic style) are set as non-stackable. The stack attribute values of the individual editing buttons can later be adjusted according to user preference settings, for example, the ninth editing button (with tag details showing a Japanese style) can be later adjusted and set to be stackable.

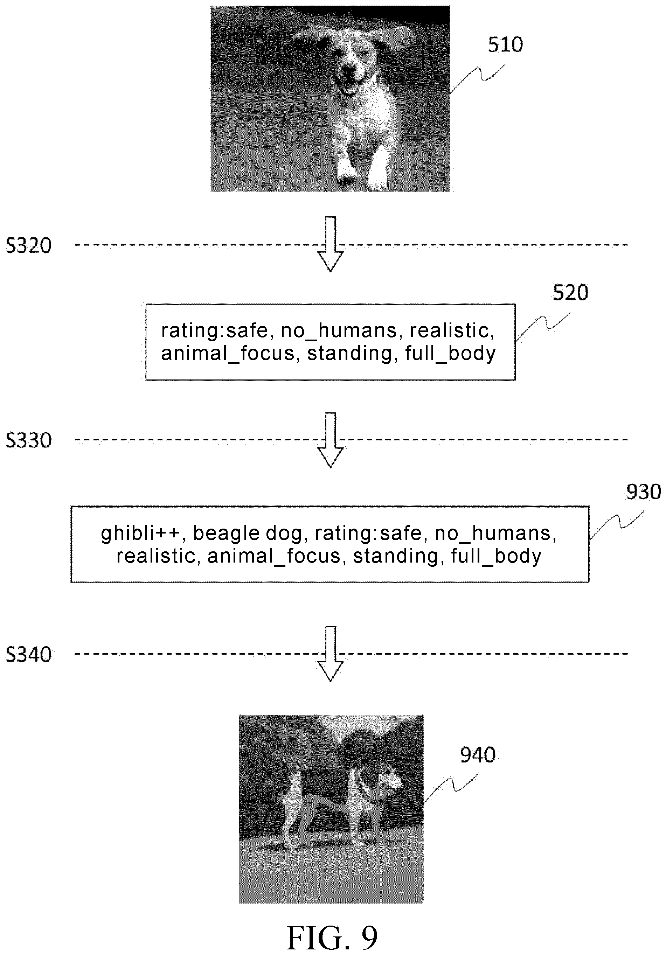

Referring to FIG. 9, FIG. 9 shows a schematic diagram of a result generated after performing steps of an embodiment of the present disclosure. More specifically, FIG. 9 shows an artificial intelligence image 940 generated based on the input image 510 by performing steps S310, S320, S330, and S340 shown in FIG. 3 by the processing module 220A, with the details given in the following description.

In some embodiments, each of the editing buttons can have an own editing weight value so that the processing module 220A can determine, based on the editing weight value corresponding to each of the editing buttons, a level of editing performed by the string editing operation on the keyword character set when step S330 is performed. In some embodiments, the editing weight value can be set to a value between 0 and 1, and can use a median value (for example, 0.5) as a reference point. For example, when the editing weight value is set to 0.5, it means that the level of editing performed by the string editing operation on the keyword character set is a basic setting. When the editing weight value is set to be greater than 0.5, it means that the level of editing performed by the string editing operation on the keyword character set is a reinforced setting (that is, the level of editing is higher than the basic setting). When the editing weight value is set to be less than 0.5, it means that the level of editing performed by the string editing operation on the keyword character set is a weakened setting (that is, the level of editing is lower than the basic setting).

In a specific example, an eleventh editing button (with tag details showing a Ghibli style) can have an editing weight value set to a value greater than 0.5 (for example, 0.7), and a twelfth editing button (with tag details showing "beagle dog") can have an editing weight value set to a value of 0.5. When a user selects the eleventh editing button, the processing module 220A can perform the string editing operation on the keyword character set by using a level of editing higher than the basic setting when step S330 is performed, thereby greater emphasizing the level of editing of the eleventh editing button.

Referring to both FIG. 8 and FIG. 9, the editing character set 830 shown in FIG. 8 is generated from the keyword character set 520 in response to two user-selected editing buttons whose stack attribute values are set as stackable (for example, the eleventh editing button and the twelfth editing button above), and an editing character set 930 shown in FIG. 9 is generated from the keyword character set 520 further in response to the editing weight value of the eleventh editing button and the editing weight value of the twelfth editing button. More specifically, since the editing weight value of the eleventh editing button (with tag details showing a Ghibli style) can be set to a value greater than 0.5 (for example, 0.7), the contents of the editing character set 930 shown in FIG. 9 is "Ghibli++". Lastly, the processing module 220A generates the artificial intelligence image 940 based on the editing character set 930 by performing step S340, thereby generating a more diversified artificial intelligence image.

In some embodiments, the editing weight value can be set according to at least one of contents of the keyword character set, a user history editing record and a default value. In a specific example, the editing weight value can be set according to a default value, for example, the eleventh editing button (with tag details showing a Ghibli style) can have an editing weight value set to a value greater than 0.5 (for example, 0.7), and a twelfth editing button (with tag details showing "beagle dog") can have an editing weight value set to a value of 0.5. In a specific example, the editing weight value can be set according to a user history editing record, for example, the editing weight value corresponding to an editing button more frequently used by a user is set to a value greater than 0.5. In a specific example, the editing weight value can be automatically set according to the contents of the keyword character set; for example, each editing weight value can be set by the BERTScore described above.

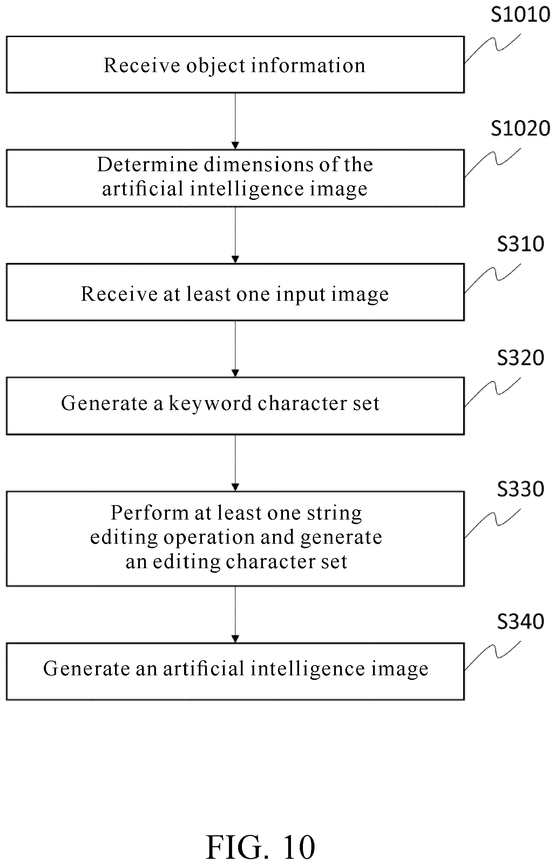

Referring to FIG. 10, FIG. 10 shows a flowchart of a method for generating an image according to an embodiment of the present disclosure. More specifically, the method shown in FIG. 10 is capable of generating an artificial intelligence image, and includes steps S310, S320, S330, S340, S1010, and S1020. Steps S310, S320, S330, and S340 are fundamentally the same as those shown in FIG. 3. That is to say, the method shown in FIG. 10 can include steps S310, S320, S330, and S340 fundamentally the same as those in FIG. 3, and further include steps S1010 and S1020.

In step S1010, object information corresponding to physical dimensions of an object is received. Step S1010 can be performed by means of an object information reception unit (not shown) of the processing module 220A. The object information includes object dimensions such as length, width, and height. More specifically, when the length and the width of physical dimensions of an object are respectively a first size and a second size, the object information reception unit can receive the object information including the first size and the second size. In a specific example, when the physical dimensions of an object (for example, a phone case) are 151*75 mm, the object information reception unit can receive the object information of 151*75 mm.

In step S1020, dimensions of the artificial intelligence image are determined based on the object information. Step S1020 can be performed by means of a dimension determining unit (not shown) of the processing module 220A. In some embodiments, step S1020 can be performed subsequent to step S1010. The dimensions of the artificial intelligence image include sizes of such as length and width. More specifically, when the object information received by performing step S1010 is individually the first size and the second size, the processing module 220A can determine that the dimensions of the artificial intelligence image are respectively the first size and the second size by performing step S1020. In some embodiments, the dimensions of the artificial intelligence image can be in a unit of pixels. In a specific example, when the object information received is 151*75 mm, the processing module 220A can determine by performing step S1020 that the dimensions of the artificial intelligence image are 2000 pixels * 2000 pixels. That is to say, a picture outline frame of the artificial intelligence image can be set to 2000 pixels * 2000 pixels.

In some embodiments, dimensions of the first display block 610 shown in FIG. 6 can be determined by the physical dimensions of an object. More specifically, after performing step S1010 and step S1020, the processing module 220A can automatically adjust a size ratio of the first display block 610.

Thus, steps S1010 and S1020 shown in FIG. 10 can further set the dimensions of the artificial intelligence image according to the physical dimensions of an object, for a user to directly generate an artificial intelligence image having fundamentally the same dimensions as the physical dimensions of the object, thereby intuitively evaluating whether the artificial intelligence image thus generated is user-desired (including sizes, positions, and ratios of the elements in the artificial intelligence image).

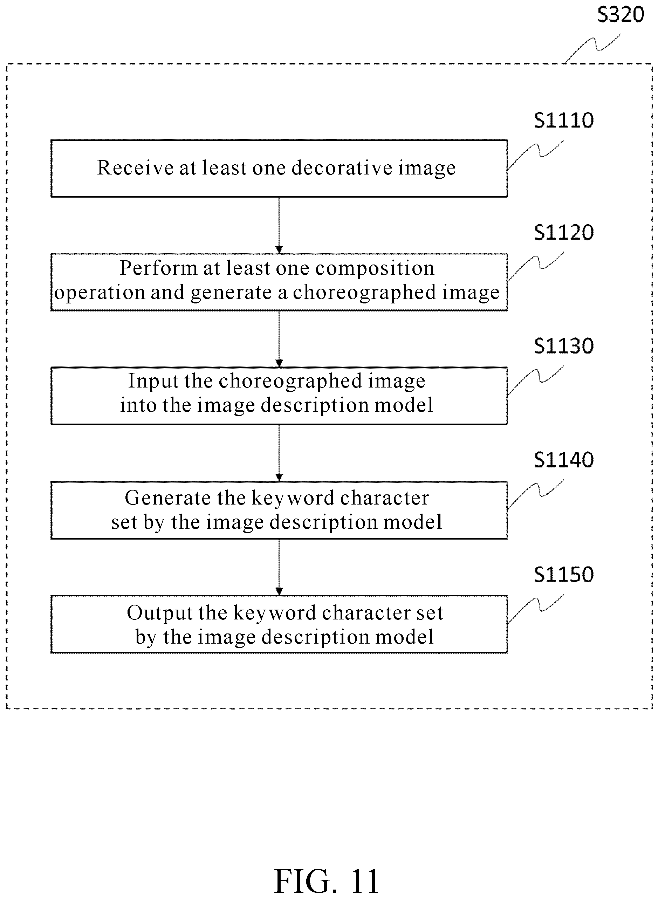

Referring to FIG. 11, FIG. 11 shows a detailed flowchart of generating a keyword character set based on at least one input image (that is, step S320) in an embodiment of the present disclosure. That is to say, step S320 in FIG. 3 can include steps S1110, S1120, S1130, S1140, and S1150, and step S320 can be completed by performing steps S1110, S1120, S1130, S1140, and S1150. Steps S1110, S1120, S1130, S1140, and S1150 can be performed by the processing module 220A shown in FIG. 2.

In step S1110, a decorative image (specifically, at least one decorative image) is received. Step S1110 can be performed by means of the image reception unit 221A of the processing module 220A shown in FIG. 2. In some embodiments, step S1110 can be performed subsequent to step S310. In some embodiments, step S1110 and step S310 can be performed simultaneously. In some embodiments, step S1110 can be similar to step S310 shown in FIG. 3, and step S1110 differs from step S310 shown in FIG. 3 in that, the decorative image is received by performing step S1110. In some embodiments, the decorative image can refer to a de-backed image including one single object, for example, a basketball, a microphone, a doll, a necklace, a hat, or sunglasses.

In step S1120, a composition operation (specifically, at least one composition operation) is performed on the input image and the decorative image, and a choreographed image is generated. Step S1120 can be performed by means of an image choreographing unit (not shown) of the processing module 220A. In some embodiments, step S1120 can be performed subsequent to step S1110. The composition operation includes, for example but not limited to, adjusting dimensions and/or positions of the input image and/or the decorative image. In some embodiments, a user can perform the composition operation on the input image and the decorative image by manually operating the processing module 220A. In a specific example, a user can operate a smartphone and select the input image and the decorative image using fingers to perform the composition operation such as moving, rotating, and scaling. In another specific example, a user can also operate a personal computer so as to use a mouse to perform the composition operation on the input image and the decorative image, thereby allowing the user to generate a more satisfying user-desired choreographed image. In some other embodiments, the processing module 220A can automatically perform the composition operation on the input image and the decorative image, so as to more quickly generate the choreographed image and provide a user with a possible choreographed image. More specifically, the processing module 220A can first analyze string contents corresponding to the input image and string contents corresponding to the decorative image, and then adjust contents of the string contents so as to automatically generate new string contents, and generate an image (that is, the choreographed image) corresponding to the new string contents based on the new string contents.

In step S1130, the choreographed image is input into the image description model 270. Step S 1130 can be performed by means of the string generation unit 222A and the image description model 270 of the processing module 220A shown in FIG. 2. In some embodiments, step S1130 can be performed subsequent to step S1120. In some embodiments, step S1130 can be similar to step S410A shown in FIG. 4A, and step S1130 differs from step S410A shown in FIG. 4A in that, the choreographed image generated is input by performing step S1130.

In step S1140, the keyword character set is generated by the image description model 270. Step S1140 can be performed by means of the string generation unit 222A and the image description model 270 of the processing module 220A shown in FIG. 2. In some embodiments, step S1140 can be performed subsequent to step S1130. In some embodiments, step S1140 is fundamentally the same as step S420A shown in FIG. 4A.

In step S1150, the keyword character set is output by the image description model 270. Step S1150 can be performed by means of the string generation unit 222A and the image description model 270 of the processing module 220A shown in FIG. 2. In some embodiments, step S1150 can be performed subsequent to step S1140. In some embodiments, step S1150 is fundamentally the same as step S430A shown in FIG. 4A.

In some embodiments, step S1140 and step S1150 can be integrated into one step, that is, generating and outputting the keyword character set by the image description model 270.

Thus, by performing the steps shown in FIG. 11, a user is enabled to generate a more diversified artificial intelligence image without having to additionally input an instruction set.

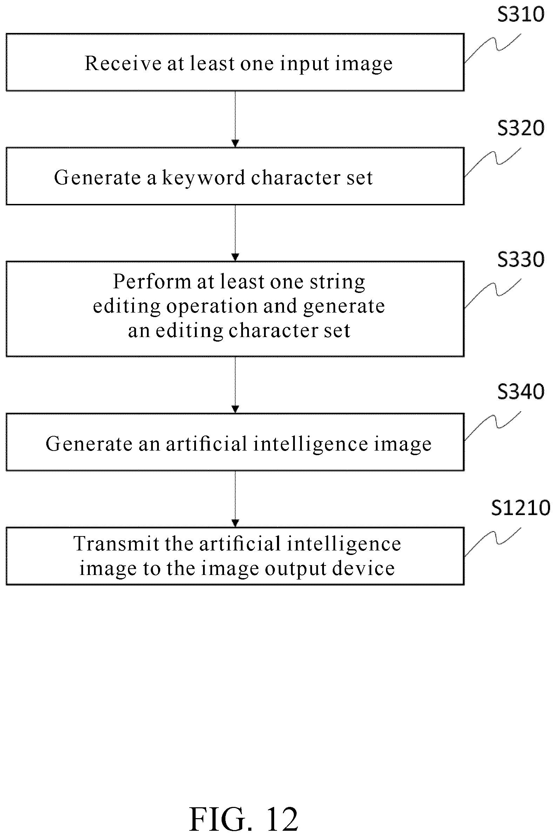

Referring to FIG. 12, FIG. 12 shows a flowchart of a method for generating an image according to an embodiment of the present disclosure. More specifically, the method shown in FIG. 12 is capable of generating an artificial intelligence image, and includes steps S310, S320, S330, S340, and S1210. Steps S310, S320, S330, and S340 are fundamentally the same as those shown in FIG. 3, that is to say, the method shown in FIG. 12 can include steps S310, S320, S330, and S340 fundamentally the same as those in FIG. 3, and further include step S1210.

In step S1210, the artificial intelligence image is transmitted to an image output device, and the artificial intelligence image is physically output by the image output device. Step S1210 can be performed by means of the image output unit 226A of the processing module 220A shown in FIG. 2. In some embodiments, step S1210 can be performed subsequent to step S340. More specifically, when the processing module 220A performs step S1210, the artificial intelligence image can be output to the image output device 310 by the image output module 240, so that the image output device 310 can print the artificial intelligence image on a physical object.

Thus, with step S1210 shown in FIG. 12, the artificial intelligence image generated by the processing module 220A can be output and printed on a physical object, so that the artificial intelligence image can be more extensively applied in various fields in need of physical printing, such as garment printing, automobile paint printing, cellphone case printing, and stickers.

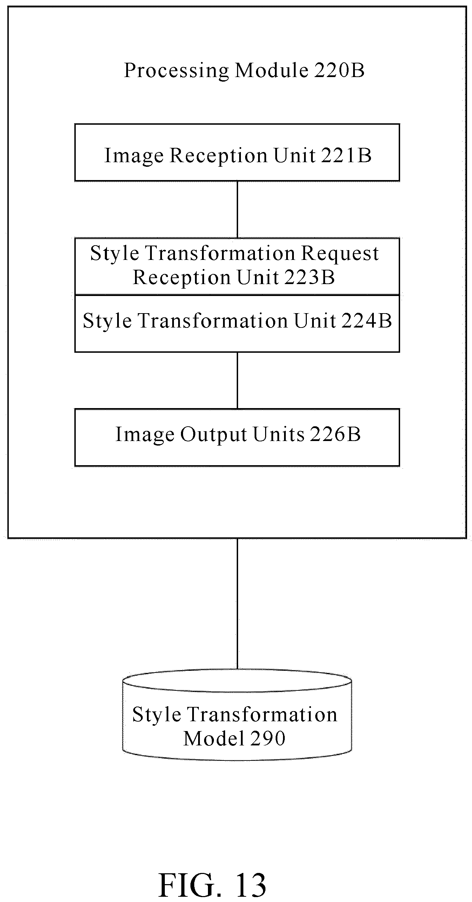

Referring to FIG. 13, FIG. 13 shows a block schematic diagram of the processing module 220B according to an embodiment of the present disclosure. The processing module 220B can be configured to be the fundamentally the same as the processing module 220 shown in FIG. 1, and differs in that, the processing module 220B can be configured to generate a style transformation image based on the input image, and the function and configuration of generating the artificial intelligence image based on the input image can be omitted.

The processing module 220B can fundamentally be configured to include an image reception unit 221B, a style transformation request reception unit 223B, a style transformation unit 224B, and an image output unit 226B. In some embodiments, the processing module 220B can further include a style transformation model 290, that is, the style transformation model 290 can be selectively configured in the processing module 220B according to user requirements. In some embodiments, the function and configuration of the style transformation model 290 can be integrated in the style transformation unit 224B.

The image reception unit 221B can be configured to be suitable for receiving an input image (specifically, at least one input image). In some embodiments, the function and configuration of the image reception unit 221B can fundamentally be the same as those of the image reception unit 221A shown in FIG. 2.

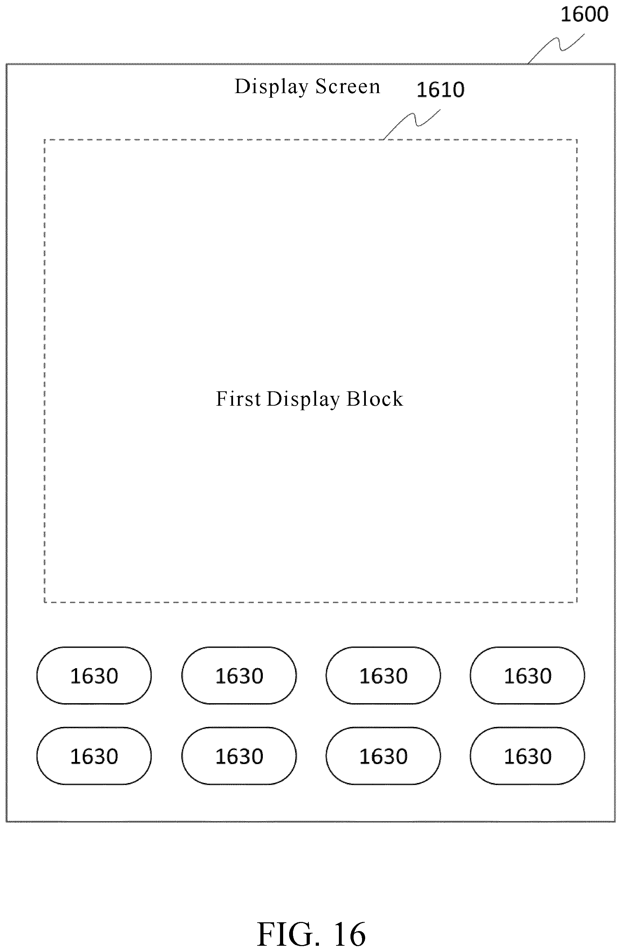

The style transformation request reception unit 223B can be configured to receive a style transformation request sent by a style transformation button (for example, style transformation buttons 1630 shown in FIG. 16). That is to say, when a user selects any one of at least one style transformation button, the selected style transformation button sends a corresponding style transformation request, such that the style transformation request reception unit 223B can receive the style transformation request corresponding to the selected style transformation button.

The style transformation unit 224B can be configured to input the input image into the style transformation model 290, and generate and output a style transformation image by the style transformation model 290. In some embodiments, the style transformation model 290 can be, for example but not limited to, an Adaptive Attention Normalization (AdaAttN). The AdaAttN can learn shallow-layer and deep-layer features from a training image, and calculate and normalize per-point weighted statistics, so that an analysis result can demonstrate the same local feature statistics. Moreover, the AdaAttN derives new local feature loss, so as to enhance local visual quality. Thus, the AdaAttN can perform a series of calculation and analysis on a training image, and transfer, based on the features learned from the training image, the input image into a style transformation image having the features.

In some embodiments, the style transformation model 290 can perform the style transformation operation on the input image based on a style learning result of the training image (specifically, at least one training image), and generate the style transformation image. More specifically, by inputting the training image into the style transformation model 290 in advance, the style transformation model 290 is enabled to emulate the features of the training image, so that the style transformation model 290 can transfer the input image into the style transformation image having the features of the training image based on the features of the training image.

In some embodiments, the training image can be an artificial intelligence image generated by any one of the methods for generating an image described above. Thus, the style transformation model 290 can emulate the features of the artificial intelligence image, so that the style transformation model 290 can transfer the input image into a style transformation image having the features of the artificial intelligence image based on the features of the artificial intelligence image.

The image output unit 226B can be configured to output the style transformation image generated by the style transformation unit 224B. In some embodiments, the image output unit 226B can store the style transformation image in a specific format in the image database 250. In some embodiments, the image output unit 226B can output the style transformation image in a specific format to the image output device 310 and/or the server 320 by the image output module 240.

Thus, in addition to being capable of generating a style transformation image based on the received input image, the processing module 220B shown in FIG. 13 further enables a user to generate the style transformation image without needing the user to additionally input an instruction set. That is to say, the computer device for generating an image provided by the present disclosure lowers operation thresholds and/or operation complications for a user, further enabling a user unfamiliar with instruction sets to also be able to generate a user-desired image file by means of the computer device.

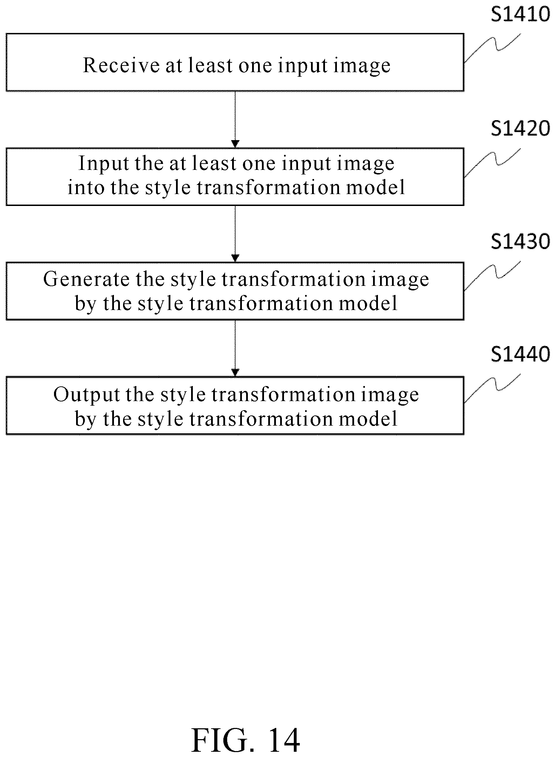

Referring to FIG. 14, FIG. 14 shows a flowchart of a method for generating an image according to an embodiment of the present disclosure. More specifically, the method shown in FIG. 14 is capable of generating a style transformation image, and includes steps S1410, S1420, S1430, and S1440. In some embodiments, the method shown in FIG. 14 can use Visual Studio Code as a development environment and coordinate with the architecture of pytorch using Python as a programming language to implement the method. In some embodiments, the method shown in FIG. 14 can use source libraries such as torch, itertools, and numpy.

In step S1410, an input image (specifically, at least one input image) is received. Step S1410 can be performed by means of the image reception unit 221B of the processing module 220B shown in FIG. 13. In some embodiments, step S1410 is fundamentally the same as step S310 shown in FIG. 3.

In step S1420, the input image is input into the style transformation model 290 in response to a style transformation request after the style transformation request sent from any one of the style transformation buttons (specifically, at least one style transformation button) is received. Step S1420 can be performed by means of the style transformation request reception unit 223B and the style transformation model 290 of the processing module 220B shown in FIG. 13. In some embodiments, step S1420 can be performed subsequent to step S1410.

In some embodiments, the style transformation buttons can be pre-established for a user to perform a style transfer operation on the input image by means of any one of the style transformation buttons. In a specific example, the style transformation buttons can include a first style transformation button (with tag details showing an ink painting style), a second style transformation button (with tag details showing an abstract style) and a third style transformation button (with tag details showing a sketching style). When a user selects the third style transformation button, the third style transformation button can issue a style transformation request, such that the processing module 220B can input the input image to the style transformation model 290 after the style transformation request reception unit 223B receives the style transformation request sent by the third style transformation button. In some embodiments, the style transformation model 290 can be, for example but not limited to, an Adaptive Attention Normalization (AdaAttN).

In step S1430, the style transformation image is generated by the style transformation model 290. Step S1430 can be performed by means of the style transformation model 290 of the processing module 220B shown in FIG. 13. In some embodiments, step S1430 can be performed subsequent to step S1420. Thus, the style transformation model 290 can transform, based on the features learned from the training image, the input image into a style transformation image having the features, so as to generate the style transformation image.

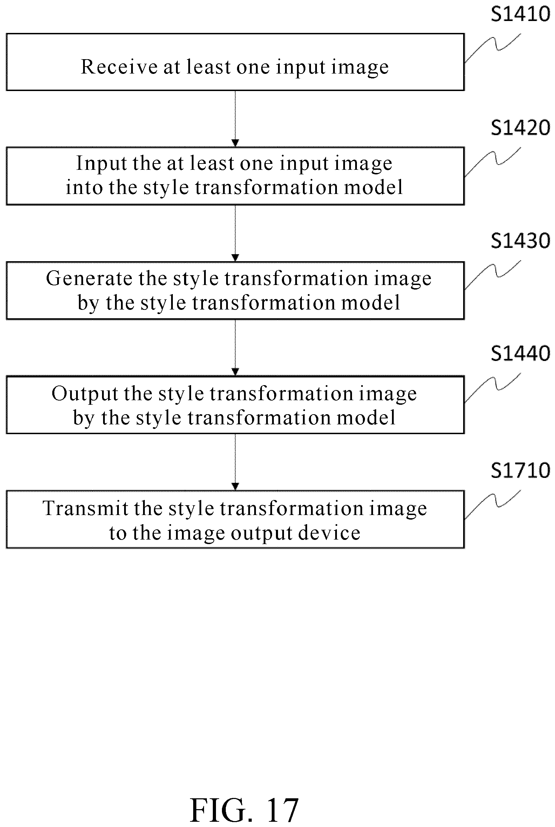

In step S1440, the style transformation image is output by the style transformation model 290. Step S1440 can be performed by means of the style transformation model 290 of the processing module 220B shown in FIG. 13. In some embodiments, step S1440 can be performed subsequent to step S1430. That is to say, by performing step S1440, the processing module 220B is allowed to further perform a subsequent process (for example, step S1710 shown in FIG. 17) for the style transformation image generated and output by the style transformation model 290.

Thus, in addition to being capable of generating a style transformation image based on the received input image, the method shown in FIG. 14 further enables a user to generate the style transformation image without needing the user to additionally input an instruction set. That is to say, the computer device for generating an image provided by the present disclosure lowers operation thresholds and/or operation complications for a user, further enabling a user unfamiliar with instruction sets to also be able to generate a user-desired image file by means of the computer device.

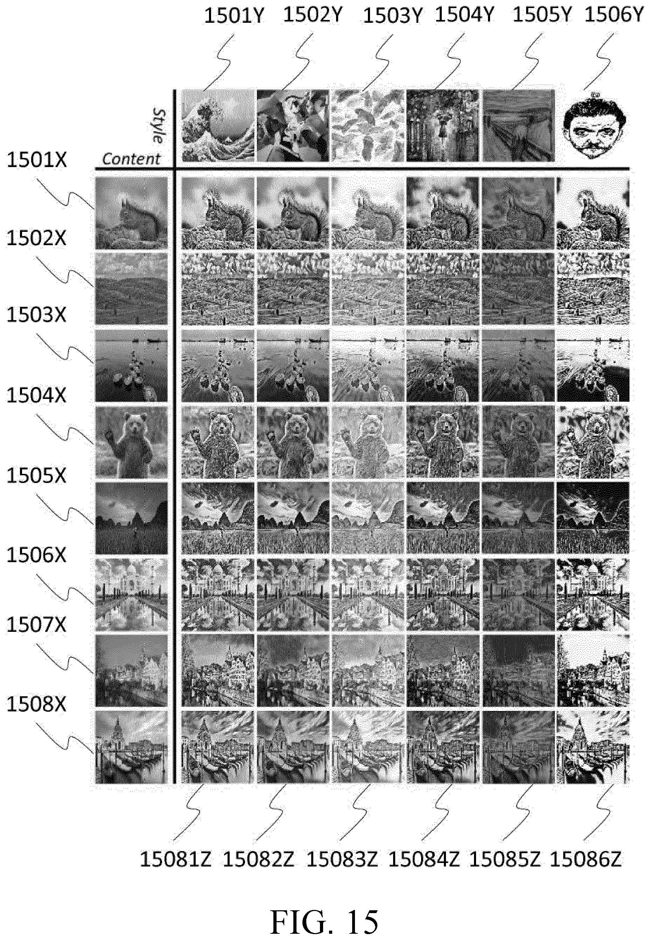

Referring to FIG. 15, sources of FIG. 15 include Liu, S., Lin, T., He, D., Li, F., Wang, M., Li, X., ...and Ding, E. (2021). Adaattn: Revisit attention mechanism in arbitrary neural style transfer. In Proceedings of the IEEE/CVF international conference on computer vision (pp. 6649-6658), and FIG. 15 shows a schematic diagram of results of different style transformation images transformed from at least one input image of the present disclosure.

The input image can refer to, for example but not limited to, any one of an input image 1501X to an input image 1508X shown in FIG. 15. The training image can refer to, for example but not limited to, any one of a training image 1501Y to a training image 1506Y shown in FIG. 15. In a specific example, when the input image received is the input image 1508X and a user selects the fourth style transformation button (with tag details showing a sketching style), the style transformation model 290 can transform the input image 1508X into a style transformation image 15086Z having the features based on the features learned from the training image 1506Y.

Similarly, when the input image received is another input image, the style transformation model 290 can similarly transform, according to the user-selected style transformation button, the input image into a style transformation image having the features based on the features learned from the training image corresponding to the style transformation button. For example, the style transformation model 290 can transform, based on the features learned from the training image 1501Y to the training image 1505Y, the input image 1508X into a style transformation image 15081Z to a style transformation image 15085Z having the features. Similarly, the remaining input image 1501X to input image 1507X can also be transformed to corresponding style transformation images.

Referring to FIG. 16, FIG. 16 shows a schematic diagram of a display screen 1600 of a user device according to an embodiment of the present disclosure. The display screen 1600 of the user device can fundamentally include a first display block 1610 and style transformation buttons 1630 (specifically, at least one editing button 1630). It should be noted that, the configuration relationship among the elements shown in FIG. 16 (for example, relative sizes and/or relative positions) can be adjusted according to user requirements, that is to say, the configuration relationship shown in FIG. 16 is merely an illustrative example.

The style transformation buttons 1630 are for a user to perform a style transform operation on the input image by selecting any one of the style transformation buttons 1630. In some other embodiments, the style transformation buttons 1630 can be pre-established. In some other embodiments, the style transformation buttons 1630 can be automatically established according to at least one of contents of a character set corresponding to the input image and a user history editing record. In some embodiments, the number of the style transformation button 1630 can be multiple, so as to allow a user to select a suitable style transformation button 1630 in a situation for better user experience. In some embodiments, by editing tag details corresponding to each of the style transformation buttons 1630, a user is allowed to more intuitively learn, according to the tag details, an expected result that can be generated after the style transformation operation is performed on the input image by each of the style transformation buttons 1630.

In some embodiments, the first display block 1610 can be configured to display the style transformation image. More specifically, after a user selects any one of the style transformation buttons 1630, the user can be aware of the style transformation image thus generated through the first display block 1610. Thus, with the display contents of the first display block 1610, a user can evaluate whether the current style transformation image meets user expectations, and determine whether to again generate a new style transformation image by means of the style transformation button 1630.

Referring to FIG. 17, FIG. 17 shows a flowchart of a method for generating an image according to an embodiment of the present disclosure. More specifically, the method shown in FIG. 17 is capable of generating a style transformation image, and includes steps S1410, S1420, S1430, S1440, and S1710. Steps S1410, S1420, S1430, and S1440 are fundamentally the same as those shown in FIG. 14. That is to say, the method shown in FIG. 17 can include steps S1410, S1420, S1430, and S1440 fundamentally the same as those in FIG. 14, and further include step S1710.

In step S1710, the style transformation image is transmitted to an image output device, and the style transformation image is physically output by the image output device. In some embodiments, step S1710 can be performed subsequent to step S1440. In some embodiments, step S1710 can be similar to step S1210 shown in FIG. 12, and step S1710 differs from step S1210 shown in FIG. 12 in that, the style transformation image thus generated is output by performing step S1710.

Thus, with step S1710 shown in FIG. 17, the style transformation image generated by the processing module 220B can be output and printed on a physical object, so that the style transformation image can be more extensively applied in various fields in need of physical printing, such as garment printing, automobile paint printing, cellphone case printing, and stickers.

In some embodiments, the various steps of the method for generating an image described above can be stored in a non-transitory computer-readable recording medium, which can be, for example but not limited to, a hard drive, an optic disk, a magnetic disk, a portable drive, or a network-accessible database. When a computer device loads and executes a program code stored therein, the non-transitory computer-readable recording medium can implement any one of the methods for generating an image described above.

In an embodiment, a computer program product for generating an image can include the various steps of the method for generating an image described above. When a computer device loads and executes the computer program product and executes the computer program product, any one of the methods for generating an image described above can be implemented.

Although the present invention is described further in detail by way of specific embodiments and the accompanying drawings, numerous modifications and changes may be made by a person skilled in the technical field pertinent to the present invention without departing from the scope or spirit defined in the appended claims. Therefore, the scope of legal protection of the present invention should be defined by the appended claims and should not be restricted by the disclosure of the present invention.

## Claims

1. A method for generating an image, the method suitable for generating an artificial intelligence image (540, 840, 940) by means of a computer device (200), the method comprising:
receiving at least one input image (510);
generating a keyword character set (520) based on the at least one input image (510);
performing at least one string editing operation on the keyword character set (520) based on an editing instruction set corresponding to an editing request after receiving the editing request sent from any one of at least one editing button (630), and generating an editing character set (530, 830, 930); and
generating the artificial intelligence image (540, 840, 940) based on the editing character set (530, 830, 930).

2. The method according to claim 1, wherein the generating of the keyword character set (520) based on the at least one input image (510) comprises:
inputting the at least one input image (510) into an image description model (270); and
outputting the keyword character set (520) by the image description model (270),
wherein the image description model (270) automatically generates the keyword character set (520) corresponding to the at least one input image (510) based on the at least one input image (510).

3. The method according to claim 1, wherein the generating of the artificial intelligence image (540, 840, 940) based on the editing character set (530, 830, 930) comprises:
inputting the editing character set (530, 830, 930) into an image generation model (280); and
outputting the artificial intelligence image (540, 840, 940) by the image generation model (280),
wherein the image generation model (280) automatically generates the artificial intelligence image (540, 840, 940) corresponding to the editing character set (530, 830, 930) based on the editing character set (530, 830, 930).

4. The method according to claim 1, further comprising:
automatically generating the at least one editing button (630) according to at least one of contents of the keyword character set (520) and a user history editing record.

5. The method according to claim 1, further comprising:
determining, based on a stack attribute value individually corresponding to each of the at least one editing button (630), whether to stack the at least one string editing operation.

6. The method according to claim 1, further comprising:
determining, based on an editing weight value individually corresponding to each of the at least one editing button (630), a level of editing performed by at least one string editing operation on the keyword character set (520).

7. The method according to claim 1, further comprising:
receiving object information corresponding to physical dimensions of an object; and
determining dimensions of the artificial intelligence image (540, 840, 940) based on the object information.

8. The method according to claim 1, wherein the generating of the keyword character set (520) based on the at least one input image (510) comprises:
receiving at least one decorative image;
performing a composition operation on the at least one input image (510) and the at least one decorative image, and generating a choreographed image;
inputting the choreographed image into an image description model (270); and
outputting the keyword character set (520) by the image description model (270),
wherein the image description model (270) automatically generates the keyword character set (520) corresponding to the choreographed image based on the choreographed image.

9. The method according to claim 1, further comprising:
transmitting the artificial intelligence image (540, 840, 940) to an image output device (310), and physically outputting the artificial intelligence image (540, 840, 940) by the image output device (310).

10. A method for generating an image, the method suitable for generating a style transformation image (15081Z-15086Z) by means of a computer device (200), the method comprising:
receiving at least one input image (1501X-1508X); and
inputting the at least one input image (1501X-1508X) into a style transformation model (290) in response to a style transformation request after receiving the style transformation request sent from any one of at least one style transformation button (1630), and outputting the style transformation image (15081Z-15086Z) by the style transformation model (290),
wherein the style transformation model (290) performs at least one style transformation operation on the at least one input image (1501X-1508X) based on a style learning result of at least one training image (1501Y-1506Y), and generates the style transformation image (15081Z-15086Z).

11. The method according to claim 10, wherein the at least one training image (1501Y-1506Y) is generated by the method for generating an image of any one of claims 1 to 9.

12. The method according to claim 11, further comprising:
transmitting the style transformation image (15081Z-15086Z) to an image output device (310), and physically outputting the style transformation image (15081Z-15086Z) by the image output device (310).

13. A computer device (200) for generating an image, the computer device (200) suitable to be electrically coupled to a user terminal, so as to receive at least one input image (510, 1501X-1508X) from the user terminal and to generate an output image based on the at least one input image (510, 1501X-1508X), the computer device (200) comprising:
an image reception module (210), configured to be electrically coupled to the user terminal, and suitable for receiving the at least one input image (510, 1501X-1508X);
a processing module (220, 220A, 220B), configured to be electrically coupled to the image reception module (210); and
a storage module (230), configured to be electrically coupled to the processing module (220, 220A, 220B),
wherein the storage module (230) has a program code stored therein, and wherein the processing module (220, 220A, 220B) is, after executing the program code stored in the storage module (230), capable of performing the method for generating an image of any one of claims 1 to 9 to generate an artificial intelligence image (540, 840, 940) or performing the method for generating an image of any one of claims 10 to 12 to generate a style transformation image (15081Z-15086Z), and uses the artificial intelligence image (540, 840, 940) or the style transformation image (15081Z-15086Z) as the output image.

14. A non-transitory computer-readable recording medium for generating an image, capable of completing the method for generating an image of any one of the claims 1 to 12 after a computer device (200) loads and executes a program code stored therein.

15. A computer program product for generating an image, capable of completing the method for generating an image of any one of claims 1 to 12 after a computer device (200) loads and executes the computer program product.
